(19) **Europäisches Patentamt / European Patent Office / Office européen des brevets**

(11) **EP 1 891 864 A1**

(12) **EUROPEAN PATENT APPLICATION**

(43) Date of publication:
27.02.2008 Bulletin 2008/09

(51) Int Cl.:
*A23L 3/015* (2006.01)   *A23G 3/54* (2006.01)
*A23G 3/00* (2006.01)

(21) Application number: 06017544.5

(22) Date of filing: 23.08.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(71) Applicant: **Kraft Foods R & D, Inc.**
81737 München (DE)

(72) Inventors:
• **Kijowski, Mark**
80331 München (DE)

• **Pfeifer, Jochen**
82377 Penzberg (DE)
• **Flauding, Thomas**
80333 München (DE)
• **Turek, Evan Joel**
Libertyville, Illinois 60048 (US)

(74) Representative: **HOFFMANN EITLE**
**Patent- und Rechtsanwälte**
**Arabellastrasse 4**
**81925 München (DE)**

(54) **Filled confectionery products**

(57)   The present invention provides a process of manufacturing a filled confectionery product with extended shelf-life comprising at least one high water activity component and at least one low water activity component, which process comprises pasteurizing the confectionery product under pressure after hermetically sealing said product in its final primary package providing a hermetic seal for the product. Moreover, there are also provided filled confectionery products obtainable by this process.

EP 1 891 864 A1

## Description

The present invention relates to a process for the manufacture of a confectionery product comprising a high water activity component, and to products obtainable by said process.

## Background Art

The combination of a confectionery material, such as chocolate and high water activity material, e.g. fresh fruit and/or dairy material, tastes good and has a superior nutritional profile versus standard confectionery. However, such a combination typically has an extremely short shelf-life.

The short shelf-life is mainly due to two factors: on the one hand, microbial and/or enzymatic contamination can lead to rapid spoilage, discoloration and/or flavor impairment with the high water activity material. On the other hand confectionery materials, such as chocolate, tend to be sensitive to moisture and will dissolve when exposed to high water activity materials.

The water activity ($a_w$) is defined as the percent equilibrium relative humidity (% ERH) divided by 100. It can also be defined as the ratio of the water vapor pressure over a food (p) to that over pure water ($p_0$):

$$a_w = p/p_0$$

Multiplication of the water activity by 100 gives the relative humidity of the atmosphere in equilibrium with the food:

$$ERH(\%) = 100 \times a_w$$

In practice, the water activity is a measure of "free" water in a food sample as opposed to "bound" water.

Typically, microbial and enzymatic degradation is suppressed by way of a pasteurization step, such as thermal or high pressure pasteurization, or other treatments which can extend shelf-life. Other technologies to prevent spoilage include sugar infusion to water activities below the growth threshold of yeast or mold and the use of acids and/or preservatives such as benzoate or sorbate. Disadvantages of thermal pasteurization, infusion and preservative technologies include a loss in fresh fruit sensorial characteristics, negative impact on nutrition profile, off flavors, and undesirable labeling. Moreover, any attempt to thermally pasteurize a material in the presence of chocolate would result in the detempering of the chocolate and a subsequent defect known as fat bloom. Another serious limitation of pasteurization is the pasteurized material's vulnerability to recontamination.

Dissolution of the moisture sensitive confectionery materials can be prevented by means of moisture barriers. Moisture barrier technologies, which help to protect the moisture sensitive confectionery materials, exist and are being further developed. Conventional dark and milk chocolates are considered to be stable to adjacent aqueous systems up to a water activity of 0.75. At higher water activities they develop unacceptable quality as moisture migrates and their moisture content exceeds 1.5% and 2.8%, respectively (Ravichandran & Kumar, Confectionery Production, Nov. 1997, 33-34). One way to overcome this problem is to apply a fat barrier layer between the moisture sensitive material and the high water activity material. Specialty fat suppliers have launched various fat barrier systems, for example Cotebar A (Loders Croklaan) or Grindsted Barriers System 2000 (Danisco). One drawback of these barriers is their high melting point which results in a waxy mouth feel. US20040241287A1 (Friesland Brands) claims a moisture barrier in food composed of a continuous fat phase with 1% to 15% water- and fat-insoluble inclusions (silicate, cellulose). One disadvantage of this invention, however, is a high fat content, a poor sensory profile, and undesirable labeling (ingredient line). W09715198 (Unilever) claims a fat based moisture barrier having a combined fat and lactose content of 80% to 100% which avoids some of the disadvantages of US20040241287A1 by using more favorable ingredients. Another approach to the problem of moisture migration is to modify the recipe of the moisture sensitive material reducing its sensitivity. US6733805 (LuFrance) and US6790466 (Danone) claim 'water resistant chocolate' characterized by recipes complying with specific equations taking into consideration fat, cocoa, skim milk, and sugar content of the chocolate and 'local free moisture content' of the adjacent aqueous phase.

By now, there has not been described a method which would extend the shelf-life of a combination comprising a water sensitive material, such as chocolate, and high water activity material, e.g. fresh fruit and/or dairy material, by way of avoiding and/or eliminating the effect of microbial contamination and at the same time avoiding spoilage of the high water activity material by dissolving the surrounding water sensitive material.

One could imagine a process whereby a high water activity material, such as a fruit filling, is pasteurized using high pressure pasteurization and filled into a chocolate shell that has been coated with a moisture barrier. A layer of moisture barrier material and chocolate could then be applied to seal the fruit filling, resulting in a fruit-filled praline. High pressure pasteurization is known to extend the shelf-life of the high water activity materials, such as fruit, without significantly degrading their sensorial qualities. However, the filling of the high water activity material, as well as the application of the sealing material, would need to be performed under aseptic conditions. Traditional chocolate manufacturing lines, which are not water cleaned and rely on the chocolate's low water activity to prevent microbial spoilage, are not compatible with the requirements of aseptic processing, and therefore, such a process would be costly to install and operate.

JP-2004357647 A describes chocolate confectionery containing a raw fruit. The confectionery is produced by sealing a raw fruit in chocolate and subjecting the product to ultra-high pressure treatment while it is preferably surrounded by a hydraulic medium. Subsequently, the confectionery is dried and optionally covered with another layer of chocolate. This reference also includes chocolate confectionery containing a raw fruit, which is produced by sealing a raw fruit in a sugar-free chocolate, applying ultra-high pressure and coating the product with a sugared chocolate. The ultra-high pressure is said to be applied at temperatures between 20 to 40 °C. In this specification the definition of "raw fruits" includes addition of acids, seasonings and little sugar to adjust the taste. The process described in JP 2004357647 A, however, has a number of substantial disadvantages caused by direct immersion of the confectionery in the hydraulic medium: There is a possibility of microbiological or chemical cross-contamination between the confectionery and the medium which puts both the product and the machinery at risk. Moreover compression and expansion of the product during the pressure cycle happens in an uncontrolled manner so that the product is likely to experience some irreversible deformation. The absence of a mechanically stable container also increases the risk of product damage during loading and unloading of the pressure chamber. The subsequent drying process includes the risk of undesirable changes in chocolate structure and appearance, for example initiation of fat or sugar bloom. A product where the fruit containing core is not completely sealed in chocolate cannot be treated with the process described in JP 2004357647 A. It may, however, be desirable to produce a confection where a part of the fruit based filling is visible to the consumer to make the product more appealing. According to JP-2004357647, it is preferred that the product is in direct contact with the hydraulic medium. Optionally, the product can be in a container or packaging. One embodiment (example) specifies the packaging as product wrapped in cellophane foil. Wrapping the product in a foil without hermetically sealing it, however, does not prevent the hydraulic medium from penetrating into the pack during high pressure treatment. Moreover a simple foil pack will compress and expand in an uncontrolled manner, consequently the product will not fully maintain its original shape, and the shell will be prone to cracking.

The challenge of economically assembling a filled confectionery product comprising water sensitive material and high water activity material, which has a prolonged shelf-life, has not yet been solved sufficiently. Methods, which would extend the shelf-life of a combination comprising a water sensitive material, such as chocolate, and high water activity material, e.g. fresh fruit and/or dairy material, by way of avoiding and/or eliminating the effect of microbial contamination and at the same time avoiding spoilage of the high water activity material by dissolving the surrounding water sensitive material, remain to be developed.

It is thus an object of the present invention to provide an economic process of manufacturing a confectionery product comprising a high water activity component and having extended shelf-life. In view of the confectionery described in the prior art, the present inventors have developed a process for the manufacture of a confectionery product to provide a more stable assembly of filled confectionery products.

## Disclosure of the Invention

In accordance with the present invention, there is provided an economic process of manufacturing a filled confectionery product with extended shelf-life comprising at least one high water activity component and at least one low water activity component, which process comprises pasteurizing the confectionery product under pressure after hermetically sealing said product in its final primary package providing a hermetic seal for the product. Moreover, there are also provided filled confectionery products obtainable by this process.

The process according to the present invention provides a solution for the above described problems in avoiding the risk of recontamination and at the same time maintaining the shape and integrity of the whole confectionery product. The confectionery product thus prepared shows extended shelf-life.

The high water activity material used in the process of the present invention can be any one of the group consisting of fruit, vegetables, cereals, and dairy based materials, and mixtures thereof. Fruit and vegetables include preparations of fruit and vegetables characterized by the presence of no more than 70% of other ingredients such as sugars or polyols, acids, thickeners, flavors, colors. Examples of fruits according to the present invention include whole fruit, fruit pieces, purees, juices, juice concentrates and mixtures thereof. Fruit includes berry fruits such as strawberry, raspberry, blueberry, cranberry, currant, or blackberry stone fruit such as cherry, peach, nectarines, or apricot exotic fruit such as banana, kiwi, pineapple, papaya, or mango. Examples of vegetables according to the present invention include beets, carrots, celery, eggplant, squash, pumpkin, potato, bell peppers, lentils, mushrooms. Sugars and polyols include sucrose, fructose, maltose, dextrose, glucose or maltose syrups, sorbitol, maltitol, lactitol, glycerol, xylitol. Acids include citric acid, lactic acid, malic acid, tartaric acid, and ascorbic acid. Thickeners include pectin, guar gum, xanthan gum, and carob gum. Flavors and colors include natural, nature identical and artificial flavors and colorants. Cereals include whole or broken grain or flour based materials which may include up to 50% of other ingredients such as sugars, acids, thickeners, flavors.

Dairy based materials include cultured dairy materials such as yoghurt, sour cream, and quark, condensed milks, and non-ripened fresh cheeses such as cottage cheese, cream, cheese, ricotta, mozzarella, Burgos type cheeses. The high water activity material according to the present invention has a water activity of between 0.80 and 0.99.

Particularly preferable examples of the high water activity material are fruit and/or dairy materials preferably with a water activity of about 0.85 to about 0.97 and even more preferably with a water activity of about 0.90 to 0.95.

The high water activity material used in the process of the invention may have undergone one or more of the steps consisting of blanching, acidification and infusion. Blanching according to the present invention means that the high water activity material was subjected to heat for a brief period of time sufficient to inactivate enzymes which otherwise could cause loss of color, flavor, nutrients, or texture. Blanching can be carried out by immersing the high water activity material in hot water or steam or by microwave heating and is followed by a rapid cooling to prevent cooking of the high water activity material.

Acidification of the high water activity material according to the present invention includes a fermentation step during which a microbial culture generates acids or the addition of organic or inorganic acids to the high water activity material in order to lower the pH value for the purpose of microbial stability, stability of color or texture, or preferred taste.

Infusion according to the present invention means that the high water activity material was immersed in a solution or syrup for a time long enough to allow diffusion of a part of the dissolved material into the high water activity material and / or diffusion of components from the high water activity material into the syrup or solution. Particularly preferable examples are solutions of sugars or polyols used to adjust the water activity of the high water activity material to a range of less than 0.99 but more than 0.80, preferably less than 0.97 but more than 0.85.

The low water activity material used in the process of the present invention can be any one of the group consisting of chocolate, compound chocolate, fat based confectionery materials, fat based moisture barriers, or sugar based confectionery such as caramel or toffee. Particularly preferable examples thereof are chocolate or compound chocolate. Chocolates according to the present invention include compositions conventionally referred to as plain, dark, bitter chocolate, semi-sweet chocolate and the like. The term 'milk chocolate' includes chocolates characterized by the use of milk ingredients in variable amounts as, e.g prescribed for 'milk chocolate', 'quality milk chocolate', and 'family milk chocolate in the EU Chocolate Directive. The term 'white chocolate' refers to compositions characterized by the absence of cocoa solids. Compound chocolates according to the present invention include compositions which to some extent exhibit the characteristics of chocolate, milk chocolate, or white chocolate while not complying with the respective standards of identity. Compound chocolates include namely compositions where cocoa butter is partially or fully replaced by vegetable fats known as CBE, CBS, or CBR and compositions using non-fat ingredients which are not permitted in chocolate complying with the standards of identity by type or quantity, e.g. whey ingredients. The low water activity component has a water activity of no more than 0.70, preferably no more than 0.50, more preferably no more than 0.35. Caramel or toffee according to the present invention is the product obtained by cooking syrup of mono-or disaccharides or blends thereof with optionally added milk powder, cooling the mixture, and optionally adding a fat source. Caramel is usually characterized by the absence of crystalline sugars in the finished product, whereas in toffee sugars are partially present in crystalline form.

The confectionery product according to the present invention may comprise a moisture barrier to separate the high water activity domain from the low water activity domain. The moisture barrier according to the present invention can be any conventional moisture barrier such as a fat based moisture barrier or a heterogeneous barrier compound. Out of these examples, heterogeneous compounds are preferred over pure fat layers. Heterogeneous barrier compounds are fat based compounds characterized by the presence of at least 20 wt. % solid, non fat soluble ingredients, preferably at least 35 wt.% solid, non fat soluble ingredients and more preferably at least 50 wt.% solid, non fat soluble ingredients. Non fat soluble ingredients include for example sugars, polyols, skim milk powder, whey powder, defatted cocoa powder, and water insoluble fibers.

The confectionery product according to the present invention has a shell made of the low water activity material and optionally one or more layers of moisture barrier and a soft core comprising the high water activity domain. The high water activity domain may be fully or partially enclosed by the low water activity material.

The process of manufacturing the confectionery product according to the present invention comprises the step of pasteurizing the confectionery product under pressure and at a temperature which renders flexibility of the shell.

Flexibility according to the present invention is the ability of the shell made of the low water activity material and optionally one or more layers of moisture barrier to conform to changes in volume or shape during build-up and release of pressure in the high pressure pasteurization step while maintaining its integrity and functionality throughout the high pressure pasteurization process and over shelf-life.

The pasteurization of the confectionery product according to the present invention is carried out in a hermetically sealed final packaging to avoid the risk of recontamination in the product assembly. Hermetically sealing the product in the final primary package prevents the confectionery product from contact with the hydraulic medium and thus avoids microbial recontamination and contamination of the confectionary product, e.g. dissolution of the water activity component, by the hydraulic medium, e.g. water.

The final packaging according to the present invention is a hermetically sealed tray or a tub having at least one rigid or semi-rigid and at least one flexible region. Rigid or semi-rigid according to the present invention means that the material experiences only marginal deformation when used as a packaging in a high pressure pasteurization process. Flexible according to the present invention means that the material experiences a substantial deformation relative to a rigid or semi-rigid material when used as a packaging in a high pressure pasteurization process. The use of such a specific blister or tray design allows mechanically protecting the product during handling before and after the pasteurization step. Moreover, the hermetically sealed tray or tub having at least one rigid or semi-rigid and at least one flexible region enables the confectionery product to maintain its shape and integrity throughout the high pressure pasteurization process and over shelf-life.

The pasteurization step of the process according to the invention is accomplished at temperatures, at which the flexibility of the shell made of the low water activity material and optionally one or several layers of moisture barrier is maintained, i.e. a temperature, at which the moisture barrier remains flexible during treatment. That is, the pasteurization is accomplished at a temperature of between 0 °C and 50 °C, preferably at a temperature of between 10 °C and 40 °C, and more preferably at a temperature of between 20 °C and 35 °C.

The pasteurization step according to the process of the present invention is a high pressure pasteurization step. High pressure pasteurization means that the pressure applied during pasteurization is between 400 and 800 MPa, preferably between 500 and 700 MPa, and more preferably between 550 and 650 MPa.

In one embodiment of the present invention, the process of manufacturing a filled confectionery product according to the present invention comprises the step of:

> 1) Moulding a low water activity material shell, e.g. chocolate or compound chocolate shell, in a tray with several cavities or tub made of a mono- or multilayer structure packaging material.

Low water activity material shells, e.g. chocolate shells, are traditionally moulded by a process of filling a mould (i.e. the cavity of a tray or the tub) with liquid low water activity material, vibrating the mould to remove air bubbles, turning the mould over to pour out excess amounts of low water activity material leaving only a thin layer on the wall of the mould, and cooling to obtain the low water activity material shell. Alternative methods include stamping such as cold-stamp, frozen-cone or cold-press moulding. In these methods a predetermined amount of low water activity material, e.g. chocolate, is filled into the mould (i.e. the cavity of a tray or the tub) and then pressed against the wall of the mould by inserting a chilled stamp for up to 5 seconds at about -10°C to 5°C. Due to the shock cooling the low water activity material, e.g. chocolate, solidifies and maintains its shape when the chilled stamp is removed. A traditionally moulded low water activity material shell, e.g. chocolate shell, has thin and thick areas, which are created during turning over the mould, as gravitational forces and flow behavior of the material unevenly affect the low water activity material pouring out. In a preferred embodiment of the present invention the low water activity material shell is stamped into the tray or tub using stamping technology.

In another embodiment of the present invention, the process of manufacturing a filled confectionery product according to the present invention optionally comprises the step of:

> 2) Depositing into the shell made of the low water activity material at least one layer of additional moisture barrier. Technologies for depositing into the shell at least one layer of additional moisture barrier include spraying, stamping, and traditional shell moulding. Out of these technologies stamping is preferred.

A further embodiment of the process for manufacture according to the present invention comprises the step of:

> 3) Depositing the high water activity material (e.g. fruit and/or dairy material) into the low water activity material shell or the assembly of low water activity material and moisture barrier.

Depositing the high water activity material into the water-sensitive material shell or the assembly of water-sensitive material and moisture barrier can be carried out by conventional methods, i.e. depositing the high-water activity material into said shell or assembly using a depositor with positive replacement pump, or any other method.

A further embodiment of the process for manufacture according to the present invention comprises the step of:

> 4) Applying a membrane or lid film to seal each cavity of the tray or tub to give the final primary package having at least one rigid or semi-rigid and at least one flexible region.

The membrane or lid film can be deposited by any arbitrary method. Hermetically sealing the confectionery product can be done individually for individual cavities or can be for a whole tray at once.

Pasteurizing the product using high pressure at a temperature, which maintains the flexibility of the moisture barrier, is preferably performed on the finished product, whereby the packaging material maintains the product shape and prevents the product from contact with the hydraulic medium, e.g. water.

Further embodiments of the present invention comprise more than one of the above steps.

In an alternative embodiment of the present invention, the process of manufacturing the confectionery product comprises one or more of the optional steps 3a) and 3b), following the above step 3):

> 3a) optionally depositing at least one covering layer of moisture barrier.

> 3b) optionally applying a bottom layer of low water activity material.

In a further embodiment of the present invention, steps 2), 3) and 3a) can be carried out by co-depositing into the shell the moisture barrier and the high water activity material.

Another embodiment of the present invention comprises step 3b), following step 3), or following step 3a).

The step of applying a bottom layer of low water activity material comprises the step of depositing low water activity material on top of the obtained assembly. Depositing of a bottom layer is usually performed by applying liquid low water activity material, e.g. melted chocolate, vibrating, or air brushing the assembly to create an even surface and optionally scraping off excess material. Alternatively the liquid bottom material can be sprayed on the assembly. Preferably, the bottom layer is applied by depositing, vibrating or air brushing without scraping off excess material or by spraying. These technologies can also be applied for the optional bottom moisture barrier according to step 3b.

According to the present invention, the above steps 1 to 3, 3a and 3b, i.e. the product assembling, can be carried out in a tray or a tub forming the rigid or semi-rigid part of the final primary package or the assembled product has to be transferred into the tray or tub forming the rigid or semi-rigid part of the final primary package prior to the above step 4.

In a further alternative embodiment the high water activity material is first formed into a desired shape, subsequently hermetically covered with at least one layer of low water activity material, transferred into the packaging, and pasteurized using high pressure. Forming of the high water activity material can be done with one of the following technologies: rotary moulding, rotary cutting, extrusion, extrusion and wire cutting, depositing in cavities of a mould followed by turning over and demoulding, depositing metered quantities on to a moving belt, or continuous depositing of a sheet or strand on to moving belt with subsequent cutting of the sheet or strand into pieces. Forming of the high water activity material may involve a set time, or cooling step in order to give the material a consistency appropriate for cutting resp. enrobing and coating. The at least one hermetically sealed layer of low water activity material can be applied to the high water activity material by enrobing or coating. Enrobing is typically performed by conveying a confectionery center on a belt through a curtain of liquid chocolate followed by a cooling step to solidify the chocolate. Alternatively the low water activity material can be applied using coating technologies such as pan coating or belt coating. Pan coating or belt coating are processes where the confectionery centers are gently tumbled in a container while the low water activity material is gradually sprayed on top of the centers with optionally intermittent cooling or drying phases. In a preferred embodiment multiple layers of low water activity material of which at least one acts as a moisture barrier are applied by either enrobing or coating technologies.

Moreover, the process according to the present invention may comprise a deaeration step, wherein the filling and or shell material is deaerated to almost completely eliminate air pockets. This deaeration step is useful to prevent deformation or loss of the integrity of the shell, since air pockets would be compressed during high pressure pasteurization and expand upon pressure release in a uncontrolled manner resulting in product defects. The deaeration step is preferably carried out before step 1, 2 or 3.

In other words, there is provided a process for the manufacture of a filled confectionery product, wherein a high water activity material may be separated from a water sensitive material by way of a moisture barrier. The high water activity component according to the present invention can be either completely or partially enclosed by the shell, i.e. the low water activity component. It is thus possible to manufacture a confectionery product, wherein the filling, i.e. the high water activity component, is visible through the membrane or lid film of the final primary package.

A particularly preferable embodiment according to the present invention comprises the following steps:

> 1) moulding a low water activity material shell, e.g. chocolate or compound chocolate shell, in a tray with several cavities or tub made of a multilayer structure packaging material, wherein the tray or tub is any tray or tub which is the rigid or semi-rigid part of the final primary package,

> 2) optionally depositing into the shell at least one layer of the moisture barrier,

> 3) depositing into the shell or the assembly of the shell and the moisture barrier fruit and/or dairy material or other high water activity material,

>> 3a) optionally depositing at least one covering layer of moisture barrier,

3b) optionally applying a bottom coating of low water activity material,

4) applying a membrane or lid film to seal each cavity of the tray or tub, wherein the membrane or lid film forms the flexible part of the final primary package,

5) pasteurizing the product using high pressure at a temperature which maintains the flexibility of the moisture barrier.

The invention also pertains to a product obtainable by this process, wherein the confectionery product has an extended shelf life. The confectionery product of the invention is capable of exhibiting a shelf life of at least 2 months and up to 6 months, providing still a very good taste after such period.

**Brief Description of the Drawings**

Figure 1 exemplifies one embodiment of the tray that is used for the manufacturing process of the confectionery product according to the present invention.

Figure 2 shows a process of manufacturing of the confectionery product according to the present invention.

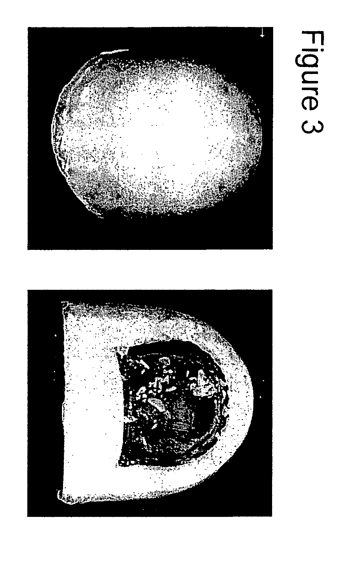

Figure 3 shows an example of a confectionery product according to the invention.

**Examples**

Following below, a specific embodiment exemplifying the process and a confectionery product according to the invention is presented.

Determination of Water Activity ($a_w$)

The water activity ($a_w$ value) is determined at 25 °C using the instrument AquaLab Model XC-2 and following the manufacturer's instructions for the instrument. The linear offset of the instrument is verified against known salt standards, one of which displaying an $a_w$ above that of the sample and the other one displaying an $a_w$ below that of the sample. The $a_w$ of distilled water has to be 1.000 $\pm$ 0.003. The measurement of the $a_w$ value of the sample is repeated until two successive values differ by less than 0.003. The $a_w$ value assigned to the sample is the average of those two values.

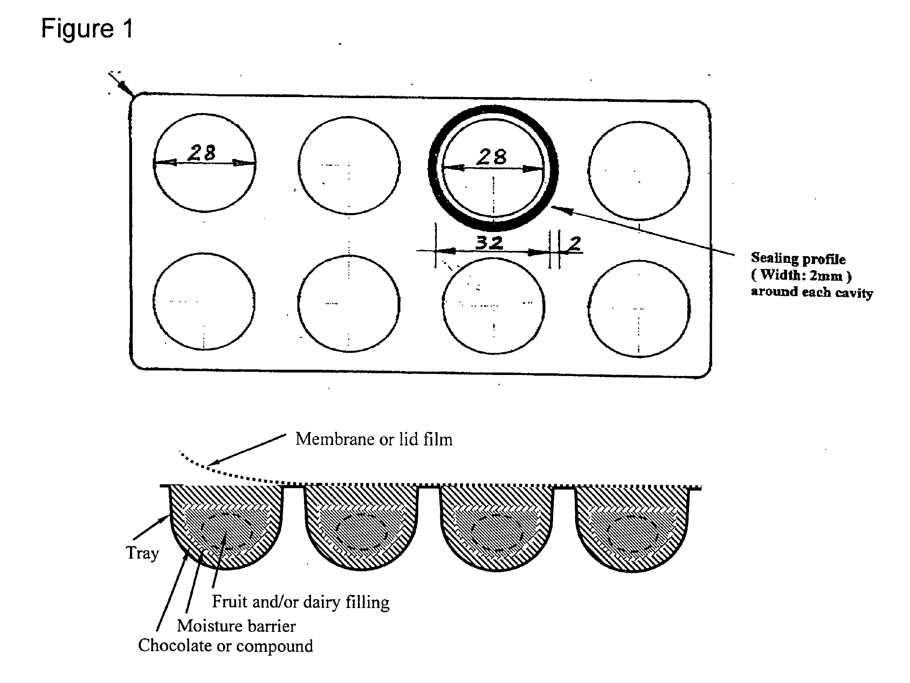

As shown in figure 1 the packaging consists of a thermoformed tray with 8 hemi-spherical or dome-shaped cavities and a transparent lid foil.

The shell and bottom of the confectionery product contained the following ingredients:

Tab. 1: Recipe for praline shell / bottom:

| Ingredient | Recipe dosage | Batch, g |
|---|---|---|
| Cocoa butter | 40.0% | 1940 |
| Lactose | 53.0% | 2570 |
| total milk protein | 7.0% | 340 |
| total | 100.0% | 4850 |

The lactose and total milk protein were mixed with 1400 g of the cocoa butter and refined to a particle size of 25 $\mu$m (D90 measured by laser diffraction) using a 3-roll refiner. The remaining cocoa butter was then added and homogeneously blended with the refined mixture at a temperature of 50°C.

A fructose / water based gelatine gel was chosen as high water activity component with a water activity of 0.90, containing the following ingredients:

Tab. 2: Recipe for praline filling:

| Ingredient | Recipe dosage | Batch, g |
|---|---|---|
| fructose | 50.3% | 247.0 |
| water | 47.6% | 233.3 |
| K-sorbate | 0.1% | 0.5 |
| gelatin | 2.0% | 10.0 |
| total | 100.0% | 490.8 |

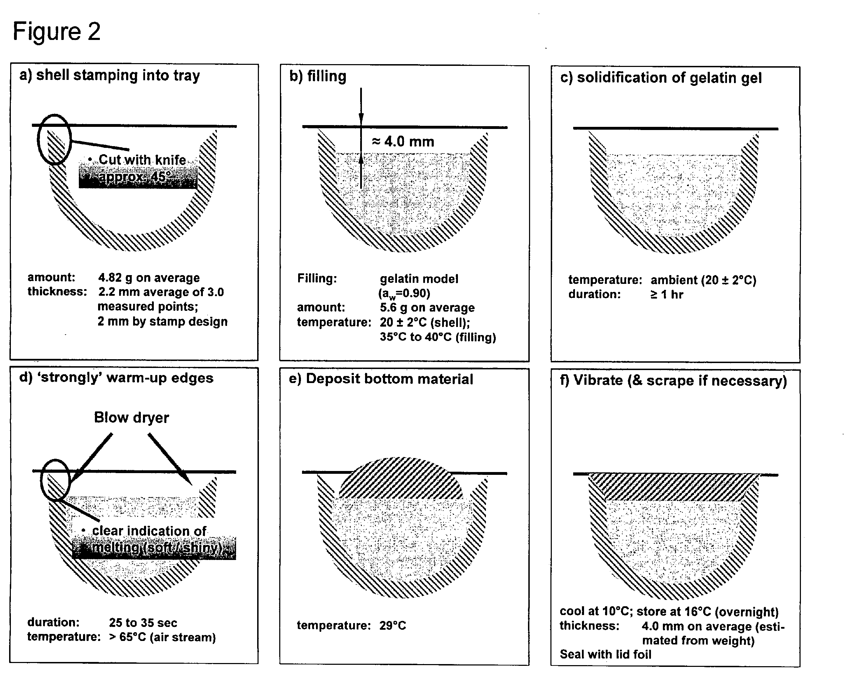

The pralines were prepared following steps a) to f) outlined in Figure 2:

a) stamping a shell into the thermoformed tray using cold stamp technology;

b) adding into the shell the filling while still liquid;

c) solidification of the gelatine gel;

d) re-warming shell edges to get good seal with bottom;

e) depositing of tempered bottom material and

f) vibrating to generate flat bottom and cooling to solidify bottom.

Finally, the thermo formed tray was sealed with a transparent lid foil and the sample was high pressure pasteurized at 600 MPa for 5 min at initial temperatures of either 20°C or 30°C.

The vast majority of individual pralines (113 out of 114) did not show any signs of leakage (which would be visible through the transparent lid foil).

The samples thus prepared were subsequently stored at 10 °C for 95 days. The vast majority (86 out of 92 individual pralines) still showed no signs of leakage.

A few pralines were removed from the package; they were all easily demoulded, had a glossy and dry surface, and a firm shell texture. This suggests that no cracks occurred which otherwise would have allowed moisture migration resulting in a wet and/or sticky surface. The samples treated at initial temperatures of 20°C and 30°C performed equally well.

**Claims**

1. Process for the manufacture of a confectionery product, comprising at least one high water activity component and at least one low water activity component, which process comprises pasteurizing the confectionery product under pressure after hermetically sealing said product in its final primary package providing a hermetic seal for the product.

2. Process according to claim 1, wherein the final primary package is **characterized by** at least one rigid or semi-rigid and at least one flexible region.

3. Process according to any one of claims 1 and 2, wherein the high water activity component has been adjusted to a water activity of between 0.80 and 0.99.

4. Process according to any one of claims 1 to 3, wherein the high water activity component is a fruit filling or dairy based filling.

5. Process according to claims 1 to 4, wherein a center of a high water activity material is formed and covered with at least one layer of low water activity material using enrobing or coating technologies, the enrobed or coated product then being transferred into its final primary package, the package being sealed, and the product being pasteurized under high pressure.

6. Process according to claim 5, wherein the process further comprises a deaeration step applied to the shell components or the filling prior to product assembly and/or sealing.

7. Process according to any one of claims 1 to 4, wherein the process further comprises the step of moulding the low water activity component into a tray or tub to give a low water activity component shell.

8. Process according to claim 7, wherein the process further comprises the step of filling the high water activity component into the moulded low water activity component.

9. Process according to claim 8, wherein the process further comprises the step of optionally depositing a bottom material on the high water activity component.

10. Process according to any one of claims 7 to 9, wherein the steps of moulding the low water activity component, filling the high water activity component into the moulded low water activity component and optionally depositing a bottom material on the high water activity component are carried out in the tray or tub forming the rigid or semi-rigid part of the final primary package.

11. Process according to any one of claims 7 to 9, wherein the steps of moulding the low water activity component, filling the high water activity component into the moulded low water activity component and optionally depositing a bottom material on the high water activity component are carried out prior to transferring the assembled product into the tray or tub forming the rigid or semi rigid part of the final primary package.

12. Process according to any of claims 10 and 11, wherein the process further comprises a deaeration step applied to the shell components or the filling prior to product assembly and sealing.

13. Process according to any one of claims 7 to 10, wherein the shell is manufactured using stamping technology.

14. Process according to any one of the preceding claims, wherein hermetically sealing the confectionery product is done individually for individual cavities.

15. Process according to any one of the preceding claims, wherein the high water activity component is completely enclosed by the low water activity component.

16. Process according to any of claims 1 to 14, wherein the high water activity component is partially enclosed by the low water activity component.

17. Process according to claim 16, wherein the high water activity component is visible through the final primary package.

18. Process according to any one of the preceding claims, wherein the confectionery product comprises two or more low water activity components **characterized in that** one acts as a barrier compound.

19. Process according to any one of the preceding claims, wherein the low water activity component is chocolate or compound chocolate.

**20.** Process according to any one of the preceding claims, wherein the final primary package is a tub or a tray and said tub or tray is **characterized by** having hemi-spherical or dome-shaped cavities.

**21.** Filled confectionery product obtainable by the process described in any one of the preceding claims.

# Figure 1

Tray

Fruit and/or dairy filling

Moisture barrier

Chocolate or compound

Membrane or lid film

28

32

2

28

Sealing profile
( Width : 2mm )
around each cavity

# Figure 2

**a) shell stamping into tray**

• Cut with knife approx. 45°

amount:      4.82 g on average
thickness:   2.2 mm average of 3.0
             measured points;
             2 mm by stamp design

**b) filling**

≈ 4.0 mm

Filling:       gelatin model
               (a$_w$=0.90)
amount:        5.6 g on average
temperature:   20 ± 2°C (shell);
               35°C to 40°C (filling)

**c) solidification of gelatin gel**

temperature:   ambient (20 ± 2°C)
duration:      ≥ 1 hr

**d) 'strongly' warm-up edges**

Blow dryer

• clear indication of melting (soft / shiny)

duration:      25 to 35 sec
temperature:   > 65°C (air stream)

**e) Deposit bottom material**

temperature:   29°C

**f) Vibrate (& scrape if necessary)**

cool at 10°C; store at 16°C (overnight)
thickness:     4.0 mm on average (esti-
               mated from weight)
Seal with lid foil

EP 1 891 864 A1

Figure 3

**EP 1 891 864 A1**

**European Patent Office**

## EUROPEAN SEARCH REPORT

Application Number

EP 06 01 7544

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 676 986 B1 (HUTTENBAUER JR SAMUEL P [US]) 13 January 2004 (2004-01-13) * example 5 * | 1-4,14, 16-18,20 | INV. A23L3/015 A23G3/54 A23G3/00 |
| X | HERMELSTEIN N H: "HIGH-PRESSURE PASTEURIZATION OF JUICE" FOOD TECHNOLOGY, INSTITUTE OF FOOD TECHNOLOGISTS, CHICAGO, IL, US, vol. 53, no. 4, April 1999 (1999-04), pages 86-90, XP000830005 ISSN: 0015-6639 * page 86, column 3 * * page 89, column 1 * | 1-4,14, 16,18 | |
| X | EP 0 931 462 A1 (NESTLE SA [CH]) 28 July 1999 (1999-07-28) * paragraphs [0006], [0021] - [0023] * | 21 | |
| A | US 2006/099306 A1 (MILLER DANIEL S [US]) 11 May 2006 (2006-05-11) * paragraphs [0024], [0050], [0051]; figure 1 * | 2,14,17, 20 | |

TECHNICAL FIELDS SEARCHED (IPC)

A23L
A23G

The present search report has been drawn up for all claims

| Place of search | Date of completion of the search | Examiner |
|---|---|---|
| Munich | 12 February 2007 | Graham, Judith |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 01 7544

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2007

| Patent document cited in search report | | Publication date | Patent family member(s) | | Publication date |
|---|---|---|---|---|---|
| US 6676986 | B1 | 13-01-2004 | NONE | | |
| EP 0931462 | A1 | 28-07-1999 | NONE | | |
| US 2006099306 | A1 | 11-05-2006 | CA 2515876 A1 | | 08-05-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040241287 A1
- WO 9715198 A, Unilever
- US 6733805 B, LuFrance
- US 6790466 B, Danone
- JP 2004357647 A
- JP 2004357647 B

**Non-patent literature cited in the description**

- **RAVICHANDRAN ; KUMAR.** *Confectionery Production,* November 1997, 33-34